# EUROPÄISCHE PATENTANMELDUNG

(11) **EP 0 785 392 A1**
(43) Veröffentlichungstag der Anmeldung: **23.07.1997**
(21) Anmeldenummer: 96119734.0
(22) Anmeldetag: 10.12.1996
(51) Int. Cl.: F21V 21/02, H02G 3/20, F21V 23/00

(54) **Leuchte zur Wand- oder Deckenmontage**

(30) Priorität: 17.01.1996 DE 29600745 U
(71) Anmelder: DETHLEFFS GmbH, D-88316 Isny (DE)
(72) Erfinder: Schmidt, Gerhard, 88316 Isny (DE)
(74) Vertreter: Patentanwälte Eisele, Otten & Roth

(57) **Zusammenfassung**

Eine Leuchte zur Wand- oder Deckenmontage mit einem zweiteiligen Sockel, wobei ein Sockelteil (3) an der Befestigungsfläche anschraubbar ausgebildet und der andere (4) mit der Leuchte verbunden ist, soll so ausgestaltet werden, daß die Beleuchtungsinstallation in Wohnwagen vereinfacht wird. Dazu ist der Sockel als Abzweigdose für die Elektroinstallation ausgebildet. Die Sockelteile (3, 4) sind schalenförmig und mit einander zugewandten Rändern zu einem Hohlkörper zusammensetzbar. Der an der Befestigungsfläche anschraubbare Sockelteil (3) besteht aus einer Umfangswand und einem Boden, die je zwei Öffnungen zum Durchführen von Kabeln aufweisen. Außerdem sind an diesem Sockelteil Klemmvorrichtungen zur Zugentlastung der Kabel angebracht.

## Beschreibung

Die Erfindung betrifft eine Leuchte zur Wand- oder Deckenmontage, insbesondere in Wohnwagen, mit einem zweiteiligen Sockel, wobei ein Sockelteil an die Befestigungsfläche anschraubbar ausgebildet und der andere mit der Leuchte verbunden ist.

Bekannte Strahler für 12 V oder 220 V, die in Wohnwagen unter den umlaufenden Staufächern angebracht werden, haben entweder einen einteiligen Sockel oder, wenn der Sockel zweiteilig ist, dann ist der an der Befestigungsfläche anschraubbare Sockelteil als plattenartiger Deckel ausgebildet, der meist keine besonderen Vorkehrungen zur Zugentlastung der Anschlußkabel hat. Der Sockel-innenraum ist insgesamt nicht groß genug, um beispielsweise eine Lüsterklemme oder eine entsprechende elektrische Verbindungsvorrichtung für Kabel aufzunehmen. Die Elektro-installation für die Beleuchtung wird deshalb in der Weise ausgeführt, daß man Abzweig- oder Verteilerdosen setzt und von diesen zu den einzelnen Leuchten fährt.

Der Erfindung liegt die Aufgabe zugrunde, die Beleuchtungsinstallation in Wohnwagen zu vereinfachen.

Diese Aufgabe wird ausgehend von Leuchten der einleitend bezeichneten Art erfindungsgemäß dadurch gelöst, daß der Sockel der einzelnen Leuchte als Abzweigdose für die Elektroinstallation ausgebildet ist. Dementsprechend wird vorgeschlagen, die Sockelteile schalenförmig zu gestalten, so daß sie mit einander zugewandten Rändern unter gegenseitiger Befestigung zu einem voluminöseren Hohlkörper zusammengesetzt werden können, als bei den bekannten Leuchten. Dadurch wird zunächst einmal erreicht, daß die erforderliche Schraubklemme (Lüsterklemme) oder eine andere, beispielsweise mit Federelementen ausgestattete marktgängige Verbindungs-klemme für das weiterzuführende Kabel in dem Leuchtensockel untergebracht werden kann.

Ferner läßt sich die Installation vorteilhafterweise dadurch vereinfachen, daß der an die Befestigungsfläche anschraubbare Sockelteil aus einem Boden und einer Umfangswand besteht, die je zwei Öffnungen im Boden oder zum Ausbrechen vorgesehene Partien in der Umfangswand zum seitlichen Durchführen von Kabeln aufweist.

Da es sich um eine Trockenrauminstallation handelt, können die Wandöffnungen des betreffenden Sockelteils randoffene, halbkreisförmig ausgerundete Schlitze sein, an deren Innenseite zur Zugentlastung und Befestigung des durchgeführten Kabels je eine Klemmvorrichtung angeordnet ist. Diese kann wie üblich aus einem Auflagesteg und einem beweglichen Bügel oder Steg bestehen, der quer über das Kabel gelegt und mit zwei Schrauben am Sockelboden festgeschraubt wird.

Die Wandschlitze mit Klemmvorrichtungen werden vor allem gebraucht, wenn die Verbindungskabel vom Sockel aus nicht durch die Möbelwand oder Bodenplatte, an welcher der Sockel angeschraubt ist, hindurchgesteckt und auf deren Innenseite weitergeführt werden, sondern wenn die Montage gewissermaßen "Aufputz" erfolgt und die Kabel an der dem Betrachter gegenüberliegenden Rückseite nur ein kurzes Stück offen geführt und dann durch eine Blendleiste abgedeckt sind. Falls der Sockel rund ist, wird für diesen Fall vorge-schlagen, daß die Wandöffnungen des an der Befestigungsfläche anzuschraubenden Bodenteils einen Umfangswinkel von etwa 60 ° einschließen. Ist der Sockel rechteckig oder hat er wenigstens einen geraden Umfangsabschnitt, so können die Wandöffnungen auf diesem Abschnitt nebeneinander angebracht werden.

Durch die Erfindung werden besondere Abzweigdosen eingespart und außerdem nicht nur der Arbeitsaufwand verringert, sondern auch ein Beitrag zur Verschönerung der Innenraumarchitektur geleistet.

Ein Ausführungsbeispiel der Erfindung wird nachfolgend anhand der Zeichnung erläutert.

Im einzelnen zeigt
- Fig. 1: eine Seitenansicht einer Strahlerleuchte für Wohnwagen mit aufgeschnittenem Sockel in natürlicher Größe,
- Fig. 2: die Innenansicht des oberen, an der Befestigungsfläche anschraubbaren Sockelteils,
- Fig. 3: einen Teilschnitt III-III und
- Fig. 4: einen Teilschnitt IV-IV dieses Sockelteils.

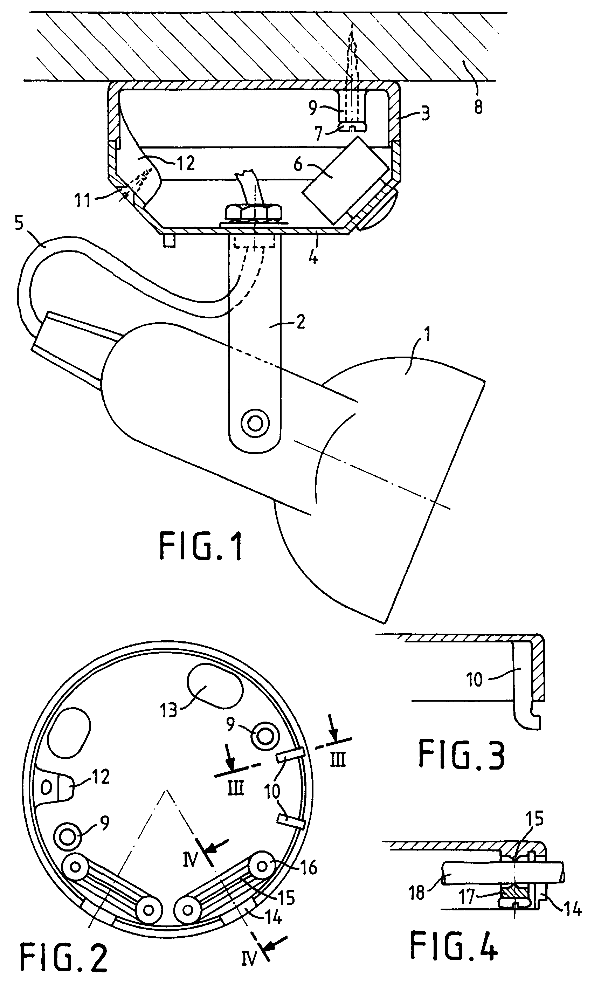

Der Strahler 1 ist gemäß Fig. 1 mittels eines U-förmigen Bügels 2 drehbar an einem Sockel befestigt, der aus einem oberen kreiszylindrischen schalenförmigen Sockelteil 3 und einem unteren teilweise konischen, an seiner Randpartie ebenfalls zylindrischen schalenförmigen Sockelteil 4 besteht. An der Bodenfläche des unteren Sockelteils ist der Bügel 2 gelagert. Durch die Lagerhülse ist das Lampenkabel 5 nach innen geführt. Ferner enthält der Sockelteil 4 einen von außen betätigbaren Schalter 6. Der obere Sockelteil 3 ist mittels zweier Schrauben 7 an einem Fachboden 8 angeschraubt. Die Schrauben durchsetzen zwei angeformte Hülsen 9. Mittels zweier an dem oberen Sockelteil angeformter Haken 10, welche in die Wand des unteren Sockelteils 4 eingreifen, und einer Schraube 11 an der gegenüberliegenden Seite sind die beiden Sockelteile miteinander verbunden. Die Schraube greift in einen angeformten Vorsprung 12 des oberen Sockelteils 3 ein.

Die spezielle Ausbildung des Sockel als Abzweigdose wird vor allem durch die Gestaltung des oberen Sockelteils 3 erkennbar, dessen Rand 15 mm hoch ist, so daß zusammen mit dem unteren Sockelteil ein genügend großer Innenraum für die Kabelenden und Klemmen frei bleibt. Der obere Sockelteil 3 weist zwei längliche Bodenöffnungen 13 auf, welche eine Kabelführung durch den Fachboden 8 hindurch ermöglichen. Seine Wand hat zwei randoffene Schlitze 14. Insbesondere diese könnten bei der Fertigung auch nur durch Sollbruchstellen vorbereitet sein, so daß sie später bei Bedarf ausgebrochen werden können. An der Innenseite vor den Schlitzen 14 sind je eine querverlaufende Klemmkante 15 und zwei Schraubsockel 16 angeordnet, um einen Klemmbügel 17 für ein Verbindungskabel 18 festschrauben zu können.

### Bezugszeichenliste:

- 1: Strahler
- 2: Bügel
- 3: Sockelteil, oben
- 4: Sockelteil, unten
- 5: Lampenkabel
- 6: Schalter
- 7: Schraube
- 8: Flachboden
- 9: Hülse
- 10: Haken
- 11: Schraube
- 12: Vorsprung
- 13: Bodenöffnung
- 14: Schlitz
- 15: Klemmkante
- 16: Schraubsockel
- 17: Klemmbügel
- 18: Verbindungskabel

## Patentansprüche

1. Leuchte zur Wand- oder Deckenmontage, insbesondere in Wohnwagen, mit einem zweiteiligen Sockel, wobei ein Sockelteil an die Befestigungsfläche anschraubbar ausgebildet und der andere mit der Leuchte verbunden ist, dadurch gekennzeichnet, daß der Sockel (3, 4) als Abzweigdose für die Elektroinstallation ausgebildet ist.

2. Leuchte nach Anspruch 1, dadurch gekennzeichnet, daß die Sockelteile (3, 4) schalenförmig ausgebildet und mit einander zugewandten Rändern zu einem Hohlkörper zusammensetzbar und aneinander befestigbar sind.

3. Leuchte nach Anspruch 1, dadurch gekennzeichnet, daß der an die Befestigungsfläche anschraubbare Sockelteil (3) aus einer Umfangswand und einem Boden besteht, die je zwei Öffnungen (13, 14) oder zum Ausbrechen vorgesehene Partien zum Durchführen von Kabeln aufweisen.

4. Leuchte nach Anspruch 3, dadurch gekennzeichnet, daß die Wandöffnungen randoffene, halbkreisförmig ausgerundete Schlitze sind, an deren Innenseite je eine Klemmvorrichtung (15, 16, 17) zur Zugentlastung des durchgeführten Kabels (18) angeordnet ist.

5. Leuchte nach Anspruch 4, dadurch gekennzeichnet, daß der Sockel rund ist und die Wandöffnungen (14) einen Umfangswinkel von etwa 60 ° einschließen.

6. Leuchte nach Anspruch 4, dadurch gekennzeichnet, daß der Sockel wenigstens einen geraden Umfangsabschnitt aufweist und die Wandöffnungen auf diesem Abschnitt nebeneinander liegen.
